# EUROPÄISCHE PATENTSCHRIFT

(11) **EP 2 367 450 B1**
(45) Veröffentlichungstag und Bekanntmachung des Hinweises auf die Patenterteilung: **07.11.2018**
(21) Anmeldenummer: 09783116.8
(22) Anmeldetag: 17.09.2009
(51) Int. Cl.: A23P 30/34, A24B 3/18

(54) **RAUCHPRODUKTHERSTELLUNG DURCH THERMISCHE EXTRUSION**
PRODUCTION OF SMOKING PRODUCTS BY THERMAL EXTRUSION
FABRICATION PAR EXTRUSION THERMIQUE D'ARTICLES À FUMER

(30) Priorität: 26.11.2008 DE 102008059031
(43) Veröffentlichungstag der Anmeldung: 28.09.2011
(73) Patentinhaber: British American Tobacco (Germany) GmbH, 20354 Hamburg (DE)
(72) Erfinder: FRANKE, Dietmar, 95445 Bayreuth (DE); SCHMEKEL, Gerald, 25337 Kölln-Reisiek (DE)
(74) Vertreter: Schwabe - Sandmair - Marx
(86) Internationale Anmeldenummer: PCT/EP2009/062049
(87) Internationale Veröffentlichungsnummer: WO 2010/060665

(56) Entgegenhaltungen:
- EP-A2- 1 219 186
- WO-A1-94/01007
- WO-A1-2006/061117
- US-A- 4 880 018
- US-A1- 2005 178 398

## Beschreibung

Die vorliegende Erfindung betrifft ein Verfahren zur Herstellung eines Rauchproduktes aus einem Tabakmaterial, bei dem das Tabakmaterial durch mindestens einen Extrusionsprozess aufbereitet wird, sowie eine Vorrichtung zur Herstellung eines Rauchproduktes aus einem Tabakmaterial mit einem Extruder. Allgemein betrifft sie das technische Gebiet der Behandlung von Tabakmaterialien in einem Extruder.

Bei vielen Extruder-Applikationen, insbesondere bei der Behandlung von stärke- und zellulosehaltigen Naturstoffen (Lebensmittel), ist die Konditionierung ein wesentlicher Schritt. Unter Konditionierung versteht man die Einstellung einer Verarbeitungsfeuchte mit Wasser oder Wasserdampf. Die Erledigung dieser notwendigen Aufgaben findet oftmals in vorgeschalteten Prozessen/Apparaten statt. Dabei wird die Fähigkeit der Naturstoffe ausgenutzt, Dampf bzw. Wasser schnell und gut penetriert aufzunehmen. Die Apparate werden dabei bei Umgebungsdruck betrieben.

Bei einem anderen Standardverfahren werden oftmals vorgefeuchtete Materialien in den Extruder-Eintragsbereich dosiert. Die Vorfeuchtung beeinflusst die Rieselfähigkeit des Produktes negativ. Je nach Materialgröße bzw. Geometrie des Eintrags kann es zur Brückenbildung und damit zum Abriss des Speisemassenstroms führen.

Die vorliegende Erfindung kann auf dem oben genannten Gebiet der Behandlung von Lebensmitteln im Allgemeinen, bzw. für Nahrungs- und Genussmittel Anwendung finden. Hierin wird aber das Gebiet der Tabakmaterial-Behandlung näher erörtert.

Eine Tabakvorbereitung dient bei einer herkömmlichen Verfahrensweise im Wesentlichen zur Herstellung von faserförmigen Teilchen aus dem Rohprodukt durch einen Schneider. Die Extrusion bietet demgegenüber erhebliche Vorteile in der Tabakbehandlung verglichen mit den konventionellen Verfahrensschritten an; sie ist ein "Hochtemperatur-Kurzzeit-Prozess".

In der folgenden Tabelle werden die Prozessbereiche der Tabakbehandlung gegenüber gestellt.

| | Extrusion | Konventionelle Tabakvorbereitung |
|---|---|---|
| Feuchte | 20-25% | ∼20-22% zum Schneiden ∼25-30% zum Trocknen |
| Temperatur | 120-150°C | < 100°C |
| Absolutdruck | bis 200 bar | Umgebungsdruck |
| Bearbeitungszeit | < 1 Minute | > 10 Minuten |

Während der Extrusion, insbesondere in Einwellen-Extrudern, werden die Materialien je nach Betriebsweise Scherkräften ausgesetzt, die zu einer erwünschten oder auch unerwünschten Erhitzung je nach sich einstellender Temperatur des Produktes führen (Scherenergieeintrag bis 0,1kwh/kg). Je nach Temperaturempfindlichkeit des Produkts muss ggf. der Prozess gekühlt werden. Der Transport des Materials im Extruder wird durch die Gesetzmäßigkeiten der Schlepp-, Druck- und Spaltströmung bestimmt. Der dissipative Energieeintrag wird vom Schneckenantrieb, also aus der Umsetzung von elektrischer Energie in Wärmeenergie, gespeist.

In der DE 10 2004 059 388 A1 und der DE 10 2005 006 117 A1 werden typische Tabakextrusionen beschrieben, bei denen das Tabakausgangsmaterial auf eine Temperatur von 60°C-180°C im Extruder durch Scherung erwärmt wird. Diese offenbarten Verfahren benutzen im Wesentlichen Elektroenergie zur Wärmeerzeugung.

Bekannt ist ferner eine Mantelbeheizung des Extruders, die allerdings nur geringe Wärmemengen austauschen kann, weil der Wärmewiderstand von Extruderinnenwand zur Tabakmasse klein und damit geschwindigkeitsbestimmend ist. Außerdem setzt die konvektive Temperierung einen hohen Füllungsgrad der Schecke voraus, was nicht immer gegeben ist.

Die WO 2006/061117 A1, WO 94/01007 A1, US 4,880,018 und US 2005/0178398 A1 beschreiben ein Verfahren gemäß dem Oberbegriff des Anspruchs 1 bzw. eine Vorrichtung gemäß dem Oberbegriff des Anspruchs 6.

Die Erfindung hat sich zur Aufgabe gemacht, die Rauchproduktherstellung, die einen Extruder verwendet, zu optimieren, und zwar hauptsächlich in Hinsicht auf die Energieumsetzung. Insbesondere soll eine Herstellung ermöglicht werden, bei welcher eine Extrusion unter Verwendung eines Minimums an verbrauchter Elektroenergie möglich wird.

Diese Aufgabe wird durch ein Verfahren gemäß dem Anspruch 1 und eine Vorrichtung gemäß dem Anspruch 6 gelöst. Die Unteransprüche definieren bevorzugte Ausführungsformen der Erfindung.

Beim erfindungsgemäßen Verfahren zur Herstellung eines Rauchproduktes aus einem Tabakmaterial wird das Tabakmaterial durch mindestens einen Extrusionsprozess aufbereitet, welcher eine Verdichtung mit Druck- und Temperaturerhöhung sowie eine mechanische Bearbeitung und schlagartige Entspannungstrocknung des Materials an einem Auslass eines Extruders umfasst. Dem Tabakmaterial im Extruder wird zur Zuführung von Prozesswärme ein erwärmtes Prozessfluid als Wärmeträger zugeführt wird.

Das Verfahren gemäß der vorliegenden Erfindung könnte in diesem Sinne auch als "thermische Extrusion" bezeichnet werden. Dabei soll der Begriff der "thermischen Extrusion" bei einer Variante eine Ausgestaltung bezeichnen, die bewusst durch Medien Enthalpie direkt in den Extruder einbringt. Die notwendige Temperaturerhöhung, die bisher unter anderem aufgrund von Reibung entstand, wird erfindungsgemäß direkt oder indirekt und mindestens teilweise durch andere Energieträger eingebracht. Dabei wird auch der aus heutiger Sicht nicht mehr zeitgemäße Verbrauch von elektrischer Energie zur Erhitzung minimiert bzw. eliminiert.

Die Vorteile der beschriebenen Erfindung liegen nicht nur in der Verbesserung der Energiekostenbilanz. Ein zusätzlicher Vorteil der Erfindung zeigt sich in der Reduzierung der Baugröße von Motor, Getriebe und ggf. Frequenzumformer, was ebenfalls zur Kostenentlastung führt. Weiterhin wird die Übertragung des notwendigen Drehmoments verringert. Dadurch kann die Torsionssteifigkeit des Schneckenkernes herabgesetzt werden (e.g. Verringerung des Durchmessers bei gleichem Außendurchmesser). Diese Erkenntnis kann nutzbar umgesetzt werden, weil durch eine größere Kammertiefe der Schnecke eine Massenstromsteigerung durch erhöhtes "Schleppvolumen" bei gleichem Gehäusedurchmesser erreicht wird.

Die Tabelle unten vergleicht die optimalen Betriebsweisen zum Eintrag von Energie in die Vorrichtung.

| | Energieeintrag durch Scherung | Energieeintrag durch Konvektion | Energieeintrag durch Medien |
|---|---|---|---|
| Schneckenfüllung möglichst | vollständig (überfüttert) | nahezu vollständig | teilgefüllt unterfüttert |

In der täglichen Praxis wird die unterfütterte Betriebsweise bevorzugt, da Bereiche der teilgefüllten Schneckengänge im drucklosen Zustand vorliegen und die Gefahr der Verstopfung geringer ist. Dadurch ist es leicht möglich mit beispielsweise vorhandenem Wasserleitungsdruck (3 bar) die notwendige Wassermenge direkt einzubringen. Das Prozessfluid wird gemäß der Erfindung vor der Einbringung in den Extruder mittels einer dem Extruder beigeordneten Pumpe gefördert, wobei der Druck des Fluids im Wesentlichen auf den Extruderdruck an der Einbringstelle erhöht wird, speziell vor der Erwärmung.

Erfindungsgemäß ist die Integration von betrieblich vorhandenen Wärmeträgern bzw. Fluiden, z.B. erwärmten Konditionierungsmitteln wie Dampf und Wasser von Vorteil, wobei das Prozessfluid vor der Einbringung in den Extruder in einem dem Extruder beigeordneten Erhitzer erwärmt werden kann.

Vorteilhafterweise befindet sich das erwärmte Prozessfluid in einem der folgenden Zustände:
- Heißwasser, insbesondere knapp unterhalb des Siedepunktes beim herrschenden Druck;
- überhitztes Wasser, insbesondere in einem Temperaturbereich von mehr als 100 bis 350 °C, speziell 200 bis 300 ° und in einem Druckbereich von 50 bis 150 bar, speziell 80 bis 120 bar; oder
- überhitzter Dampf.

Bar-Angaben betreffen Absolutdrücke.

Das Prozessfluid kann bei steigender Extrudertemperatur mit steigendem Massenstrom in den Extruder eingebracht werden, speziell mit einem Massenstrom von 5 bis 60 kg/h, insbesondere 30 bis 45 kg/h.

Die erfindungsgemäße Vorrichtung zur Herstellung eines Rauchproduktes aus einem Tabakmaterial hat einen Extruder, der eine Verdichtung eines Tabakmaterials mit Druck- und Temperaturerhöhung sowie eine mechanische Bearbeitung und schlagartige Entspannungstrocknung des Materials am Extruderauslass vornimmt. Dem Extruder ist ein Erhitzer beigeordnet, der ein Prozessfluid erwärmt, welches dem Extruder zur Zuführung von Prozesswärme als Wärmeträger zugeführt wird.

Dabei wird dem Tabakmaterial zusätzlich (zu mechanischer und äußerer Erwärmung) Wärmeenergie zugeführt.

Im Prozessfluid-Transportweg ist eine Pumpe angeordnet, die das Fluid fördert und den Druck des Fluids im Wesentlichen auf den Extruderdruck an der Einbringstelle erhöht. Die Pumpe kann im Prozessfluid-Transportweg vor dem Erhitzer und insbesondere hinter einem Fluidreservoir angeordnet sein.

Die Erfindung wird im Weiteren anhand von Ausführungsformen und unter Bezugname auf die beiliegenden Zeichnungen näher erläutert. Sie kann alle hierin beschriebenen Merkmale einzeln sowie in jedweder sinnvollen Kombination umfassen und auch als Verwendung der hierin dargestellten Verfahrens- und Vorrichtungsvarianten auf dem Gebiet der Rauchproduktherstellung aufgefasst werden. In den beiliegenden Zeichnungen zeigen:
- Figur 1: eine erfindungsgemäß ausgestaltete Vorrichtung für die Rauchproduktherstellung durch thermische Extrusion;
- Figur 2: ein Diagramm, das die Energienutzung in einem Extruder veranschaulicht; und
- Figur 3: ein Diagramm, das Temperaturerhöhung, Massenstrom und Leistungseintrag bei der thermischen Extrusion gegenüberstellt.

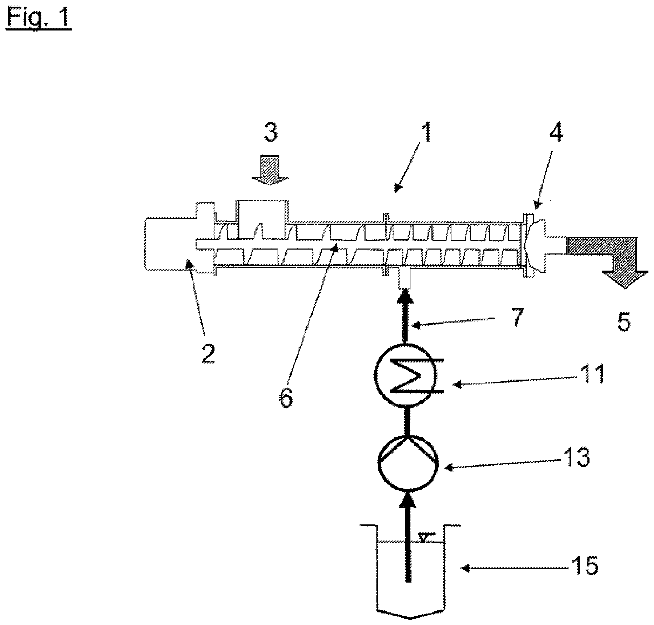

Eine Vorrichtung zur Umsetzung der vorliegenden Erfindung ist in der Figur 1 gezeigt. Der dargestellte Extruder 1 hat einen Antrieb 2 für eine im Gehäuse angebrachte Förderschnecke 6, mit der Tabakmaterial gefördert und verdichtet wird, welches an der mit 3 bezeichneten Stelle in den Extruder 1 eintritt. Die Schnecke 6 fördert und verdichtet dabei das Tabakmaterial, bis es rechts am Formwerkzeug 4ankommt, wo es beispielsweise durch einen sich öffnenden und schließenden Scherspalt ausgelassen wird, und dann als faseriges Extrudat 5 für die Rauchproduktfertigung zur Verfügung steht. Etwa in der Mitte der Vorrichtung wird erfindungsgemäß ein erwärmtes Prozessfluid 7 in den Extruder 1 eingebracht, wobei das Fluid 7 (beispielsweise erhitztes Wasser) vorher in einen Erhitzer 11 erwärmt worden ist, nachdem es mit einer Pumpe 13 aus einem Reservoir 15 gefördert wurde.

Bei der hier dargestellten Ausführungsform findet also eine direkte Einbringung von Konditioniermedium bzw. -fluid 7 (e.g. Wasser, Dampf) oder von anderen flüssigen Rezeptbestandteilen (Feuchthaltemitteln) in den Extruder 1 statt. Dabei kann das Fluid 7 bis unterhalb des Siedepunktes erhitzt werden, um mit einem Maximum an Enthalpie zum Prozess beizutragen. Der Siedepunkt richtet sich natürlich nach dem Prozessdruck; je höher der Prozessdruck, desto höher die mögliche Dosiertemperatur und der damit verbundene Enthalpieeintrag.

Es soll nicht unerwähnt bleiben, dass die Dosierung von Wasser im Druckbereich die Möglichkeit schafft, den Prozess trotz Verschleißes der Schnecke 6 länger zu betreiben. Diese Beobachtung erklärt sich durch die schleichende Erhöhung des Füllungsgrades im Verschleißbetrieb der Schnecke 6. Dadurch werden immer größere Dosierdrücke seitens der Speisevorrichtung abverlangt. Eine verlängerte Standzeit hat erheblichen Einfluss auf die spezifischen Verschleißkosten des Prozesses und ist somit sehr attraktiv.

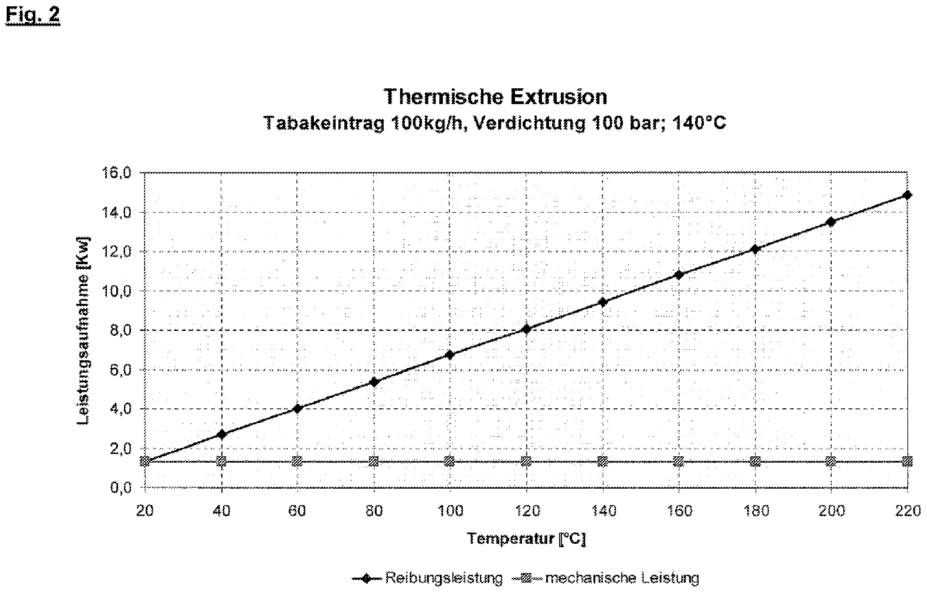

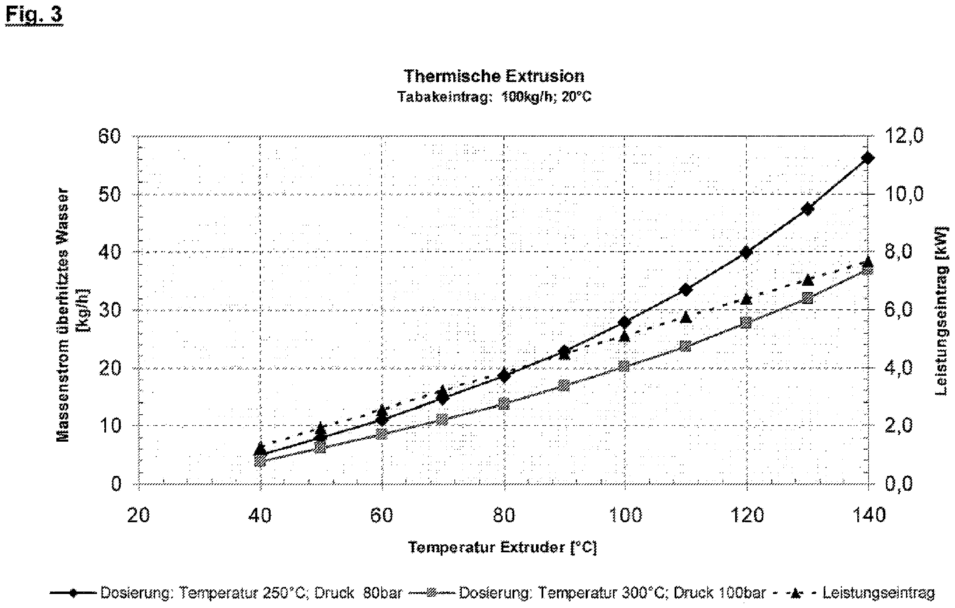

Am Beispiel der Figur 2 wird die Nutzung der elektrischen Energie in einem Extruder, aufgeteilt zwischen Reibungsarbeit (Temperaturerhöhung) und mechanischer Arbeit dargestellt. Das Diagramm zeigt auf welche elektrische Leistung in die Apparatur gesteckt werden muss, um bestimmte Temperaturen im Tabakprodukt zu erreichen. Dabei sind (wie auch in der Figur 3) die Parameter für den Tabakeintrag (100 kg/h) und die Verdichtung (100 bar) festgeschrieben. In der Grafik der Figur 2 wird getrennt aufgeführt welcher Anteil dem Transport der Tabakmenge durch die Vorrichtung zuzuschreiben ist und welcher Anteil durch innere Reibung in eine Temperaturerhöhung mündet. Es ist auffällig, dass der mechanische Energieeintrag, bestehend aus Leerlauf-, Kompressions- und Beschleunigungsarbeit in etwa konstant ist. Die Figur 2 verdeutlicht, dass bei einem Extrusionsprozess der Energieverbrauch je nach Prozessbedingung hauptsächlich zur Erhitzung benutzt wird.

In der Figur 3 ist das Prozessparameterfeld Temperaturerhöhung als Funktion des Massenstroms Wasser dargestellt. Die zweite Ordinate gibt Auskunft über den Leistungseintrag. Dieses Diagramm zeigt also die oben schon beschriebene Kurve der Figur 2 bezogen auf die rechte Y-Achse zusammen mit zwei Kurven, bei denen der Energieeintrag mittels eines weiteren Mediums (Dampf, gesättigt, überhitzt, ...) erreicht wird (bezogen auf die linke Y-Achse). Die Werte für die Dampfmenge und die erreichte Temperatur sind gemessene Werte. Deshalb enden sie bei 140°C, was eine für die vorliegende Erfindung gebräuchliche Arbeitstemperatur ist. Die Figur 3 verdeutlicht also, dass die Einbringung definierter Mengen an Medium bei bestimmten Temperaturen den Einsatz von entsprechenden Mengen an Reibungsenergie durch den elektrischen Antrieb ersetzen können. Es ist also durchaus möglich, durch Einspeisung von 30 kg/h 300°C Wasser eine Mischtemperatur von ca. 130°C zu erreichen. Wenn mechanische Energieeinträge (Elektromotor) vermieden werden können, kann einerseits die gesamte Anlage schwächer und damit kostengünstiger konstruiert bzw. ausgelegt werden, andererseits besteht die Möglichkeit, eine Energieform zu verwenden, die billiger erzeugt werden kann.

### Beispiele/Versuche:

Ein Einwellen-Extruder 1 wird konstant mit 100 kg/h eines trockenen Tabakproduktes 3 kalt gefüttert. Die Rezeptur verlangt eine Konditionierung mit 15 kg/h Wasser. Es werden drei Versuche zur Demonstration des erfindungsgemäßen Verfahrens in der Vorrichtung gemäß Figur 1 (in Versuch 1 und 2 ohne Zuführung erhitzten Fluids 7) durchgeführt:

### Versuch 1 (Vergleichsversuch):

Das Rohprodukt wird in einem ersten Schritt vor der Extrusion in einem Konditionierer (nicht in Figur 1 dargestellt) mit kaltem Wasser behandelt.

### Versuch 2 (Vergleichsversuch):

Die Konditionierung mit kaltem Wasser wird direkt im Extruder durchgeführt.

### Versuch 3 (erfindungsgemäßer Versuch):

Wiederholung des Versuchs 2, jedoch wird das Wasser 7 vor dem Eintrag in den Extruder 1 auf 250°C erhitzt. Die Dosierung setzt natürlich den entsprechenden Arbeitsdruck im Extruder 1 und beispielsweise eine Plungerpumpe 13 zum Erreichen der Einspeisebedingungen voraus.

### Ergebnis:

Die Extrusionsversuche wurden durchgeführt und die Leistungsaufnahme des Antriebes protokolliert. Die Versuche 1 und 2 zeigen eine ähnliche Leistungsaufnahme; wobei Versuch 2 tendenziell weniger Strom verbraucht. Das Resultat kann durch eine bessere Konditionierung (längere Verweilzeit) im Falle des Versuches 1 erklärt werden.

Der Versuch 3 verbrauchte signifikant weniger elektrische Antriebsleistung, was den Umständen zugeschrieben wird, die oben bei den theoretischen Erwägungen aufgeführt wurden (unter anderem: Möglichkeit der Unterfütterung; besserer Wirkungsgrad bei der Energieübertragung auf das Tabakmaterial; geringere Verstopfungs- und Reibeffekte).

Es wird ein demnach erfindungsgemäß eine vorteilhafte Extrusion für Tabakmaterialien bereitgestellt, welche den gezielten Eintrag von Enthalpie durch ein rezepturbestimmtes Medium nutzt, um (elektrische) Energie einzusparen. Ferner werden verbesserte konstruktive Möglichkeiten zur Apparateauslegung bereit gestellt.

## Patentansprüche

1. Verfahren zur Herstellung eines Rauchproduktes aus einem Tabakmaterial bei dem das Tabakmaterial durch mindestens einen Extrusionsprozess aufbereitet wird, welcher eine Verdichtung mit Druck- und Temperaturerhöhung sowie eine mechanische Bearbeitung und schlagartige Entspannungstrocknung des Materials an einem Auslass eines Extruders (1) umfasst, wobei Prozesswärme dem Tabakmaterial im Extruder (1) als Enthalpie eines erwärmten Prozessfluids (7) als Wärmeträger zugeführt wird, **dadurch gekennzeichnet, dass** das Prozessfluid (7) vor der Einbringung in den Extruder (1) mittels einer dem Extruder (1) beigeordneten Pumpe (13) gefördert wird, wobei der Druck des Fluids im Wesentlichen auf den Extruderdruck an der Einbringstelle erhöht wird.

2. Verfahren nach Anspruch 1, bei dem das Prozessfluid (7) vor der Einbringung in den Extruder (1) in einem dem Extruder beigeordneten Erhitzer (11) erwärmt wird.

3. Verfahren nach einem der Ansprüche 1 oder 2, bei dem das Prozessfluid ein erwärmtes Konditionierungsmittel ist.

4. Verfahren nach einem der Ansprüche 1 bis 3, bei dem das Prozessfluid erwärmtes Wasser oder Dampf ist, speziell in einem der folgenden Zustände:
- Heißwasser, insbesondere knapp unterhalb des Siedepunktes beim herrschenden Druck;
- überhitztes Wasser, insbesondere in einem Temperaturbereich von mehr als 100 bis 350 °C, speziell 200 bis 300 ° und in einem Druckbereich von 50 bis 150 bar, speziell 80 bis 120 bar;
- überhitzter Dampf.

5. Verfahren nach einem der Ansprüche 1 bis 4, bei dem das Prozessfluid bei steigender Extrudertemperatur mit steigendem Massenstrom in den Extruder eingebracht wird, insbesondere mit einem Massenstrom von 5 bis 60 kg/h, insbesondere 30 bis 45 kg/h.

6. Vorrichtung zur Herstellung eines Rauchproduktes aus einem Tabakmaterial mit einem Extruder (1), der eine Verdichtung eines Tabakmaterials mit Druck- und Temperaturerhöhung sowie eine mechanische Bearbeitung und schlagartige Entspannungstrocknung des Materials am Extruderauslass vornimmt, wobei dem Extruder (1) ein Erhitzer (11) beigeordnet ist, der ein Prozessfluid (7) erwärmt, welches dem Extruder (1) zur Zuführung von Prozesswärme als Enthalpie zugeführt wird, **dadurch gekennzeichnet, dass** im Prozessfluid-Transportweg eine Pumpe (13) angeordnet ist, die das Fluid fördert und den Druck des Fluids im Wesentlichen auf den Extruderdruck an der Einbringstelle erhöht.

7. Vorrichtung nach Anspruch 6, **dadurch gekennzeichnet, dass** die Pumpe (13) im Prozessfluid-Transportweg vor dem Erhitzer (11) und insbesondere hinter einem Fluidreservoir (15) angeordnet ist.

## Claims

1. Method for producing a smoking product from a tobacco material in which the tobacco material is treated by at least one extrusion process, which comprises a compression by increasing the pressure and temperature, as well as a mechanical processing and immediate flash-drying of the material at an outlet of an extruder (1), wherein process heat is supplied to tobacco material in the extruder (1) as enthalpy of a heated process fluid (7) as a heat transfer medium, **characterised in that** the process fluid (7) is conveyed by means of a pump (13) allocated to the extruder (1) before being introduced into the extruder (1), wherein the pressure of the fluid is substantially increased to the extruder pressure at the point of introduction.

2. Method according to claim 1, in which the process fluid (7) is heated in a heater (11) allocated to the extruder before being introduced into the extruder (1).

3. Method according to one of claims 1 or 2, in which the process fluid is a heated conditioning agent.

4. Method according to one of claims 1 to 3, in which the process fluid is heated water or steam, especially in the following states:
- hot water, in particular just below boiling point at the prevailing pressure;
- superheated water, in particular in a temperature range of more than 100 to 350°C, especially 200 to 300°, and in a pressure range of 50 to 150 bar, especially 80 to 120 bar;
- superheated steam.

5. Method according to one of claims 1 to 4, in which the process fluid is introduced into the extruder at an increasing mass flow as the extruder temperature increases, in particular at a mass flow of 5 to 60 kg/h, in particular 30 to 45 kg/h.

6. Device for producing a smoking product from a tobacco material having an extruder (1), which performs a compression of a tobacco material by increasing the pressure and temperature, as well as a mechanical processing and immediate flash-drying of the material at the extruder outlet, wherein a heater (11) is allocated to the extruder (1), said heater (11) heating a process fluid (7), which is supplied to the extruder (1) for supplying process heat as enthalpy, **characterised in that** a pump (13) is arranged in the process fluid transport path, said pump (13) conveying the fluid and substantially increasing the pressure of the fluid to the extruder pressure at the point of introduction.

7. Device according to claim 6, **characterised in that** the pump (13) is arranged in front of the heater (11) in the process fluid transport path and, in particular, behind a fluid reservoir (15).

## Revendications

1. Procédé de fabrication d'un produit à fumer à partir d'un produit de tabac chez lequel le produit de tabac est préparé par au moins un processus d'extrusion, lequel comprend une densification avec une augmentation de pression et de température, ainsi qu'un traitement mécanique et un séchage de décompression de type battage du matériau au niveau d'une sortie d'une extrudeuse (1), dans lequel de la chaleur de processus est apportée en tant que caloporteur au produit de tabac dans l'extrudeuse (1) sous forme d'enthalpie d'un fluide de processus (7) réchauffé, **caractérisé en ce que** le fluide de processus (7) est transporté avant l'introduction dans l'extrudeuse (1) au moyen d'une pompe (13) coordonnée avec l'extrudeuse (1), dans lequel la pression du fluide est augmentée essentiellement jusqu'à la pression de l'extrudeuse au niveau du lieu d'introduction.

2. Procédé selon la revendication 1, dans lequel le fluide de processus (7) est chauffé dans un dispositif de chauffage (11) coordonné avec l'extrudeuse avant l'introduction dans l'extrudeuse (1).

3. Procédé selon l'une des revendications 1 ou 2, dans lequel le fluide de processus est un produit de conditionnement réchauffé.

4. Procédé selon l'une des revendications 1 à 3, dans lequel le fluide de processus est de l'eau réchauffée ou de la vapeur, en particulier dans l'un des états suivants :
- eau chaude, notamment juste en dessous du point d'ébullition à pression ambiante ;
- eau surchauffée, notamment dans une plage de température supérieure de 100 à 350 °C, en particulier, de 200 à 300 °C et dans une plage de pression de 50 à 150 bar, en particulier, de 80 à 120 bar ;
- vapeur surchauffée.

5. Procédé selon l'une des revendications 1 à 4, dans lequel le fluide de processus est introduit dans l'extrudeuse avec un flux massique croissant pendant la croissance de la température de l'extrudeuse, notamment avec un flux massique de 5 à 60 kg/h, en particulier, 30 à 45 kg/h.

6. Dispositif de fabrication d'un produit à fumer à partir d'un produit de tabac avec une extrudeuse (1) qui effectue une densification du produit de tabac avec une augmentation de pression et de température, ainsi qu'un traitement mécanique et un séchage de décompression de type battage du matériau à la sortie d'extrudeuse, dans lequel un dispositif de chauffage (11) est coordonné avec l'extrudeuse (1) qui réchauffe un fluide de processus (7), lequel est amené à l'extrudeuse en tant que chaleur de processus sous forme d'enthalpie, **caractérisé en ce qu'**une pompe (13) est agencée sur le chemin de transport du fluide de processus, qui transporte le fluide et augmente sensiblement la pression du fluide jusqu'à la pression de l'extrudeuse.

7. Dispositif selon la revendication 6, **caractérisé en ce que** la pompe (13) est disposée sur le chemin de transport du fluide de processus avant le dispositif de chauffage (11) et en particulier, derrière un réservoir de fluide (15).
